# EUROPEAN PATENT APPLICATION

(11) **EP 4 845 121 A1**
(43) Date of publication of application: **25.11.2026**
(21) Application number: 26179672.6
(22) Date of filing: 19.05.2026
(51) Int. Cl.: H04L 47/28, H04L 47/35, H04L 45/24

(54) **PRECISION TIMING SOFTWARE USING INTERLEAVED STREAMS TO TRANSMIT CONTINUOUS DATA**

(30) Priority: 23.05.2025 US 202519216784
(71) Applicant: Analog Devices International Unlimited Company, Limerick (IE)
(72) Inventor: Davis, Timothy, Co. Limerick (IE); Yang, Lin, Co. Limerick (IE)
(74) Representative: Wallin, Nicholas James

(57) **Abstract**

A first device generates a plurality of packets to be transmitted to a second device. The first device determines, for each group of consecutive packets, a future timestamp for when the second device should forward a first packet of the group to a third device. Additionally, the first device determines, for each group of consecutive packets, relatively small offsets to add to the future timestamps which are applied to other packets of the group. Next, the first device attaches a corresponding group of future timestamps to each group of consecutive packets. Then, the first devices sends each group of consecutive packets, with the attached future timestamps, to the second device on a first type of interface. The second device sends, based on the attached future timestamps, each group of consecutive packets to a third device on a second type of interface.

## Description

### BACKGROUND

### Priority Claim

This European patent application claims priority from United States patent application no. 19/216,784, filed 23rd May 2025.

### Technical Field

Embodiments described herein relate to data communications, and more particularly, but not by way of limitation, to techniques for efficiently streaming data.

### Description of the Related Art

The User Datagram Protocol (UDP) is a transport layer protocol in the Internet Protocol suite, designed for fast and simple data transmission. Unlike Transmission Control Protocol (TCP), UDP is connectionless and unreliable, meaning that UDP does not establish a connection before sending data and does not guarantee delivery or order. This makes UDP suitable for applications (e.g., streaming) where speed and minimal overhead are more important than absolute reliability.

### SUMMARY

Various embodiments of systems, apparatuses, and methods for implementing precision timing software using interleaved streams to transmit continuous data are contemplated.

In one embodiment, a first device generates a plurality of packets to be transmitted on a first type of interface to a second device. The first device determines, for each pair of consecutive packets, a future timestamp for when the second device should forward a first packet of the pair to a third device. Additionally, the first device determines, for each pair of consecutive packets, a relatively small offset to add to the future timestamp to be applied to a second packet of the pair. Next, the first device attaches a corresponding pair of future timestamps to each pair of consecutive packets. Then, the first device sends each pair of consecutive packets, with the attached future timestamps, to the second device on the first type of interface. The second device receives each pair of consecutive packets from the first device, and the second device sends, at a first data rate, each pair of consecutive packets based on the attached future timestamps to a third device on a second type of interface, where the second type of interface includes dual physical links. The third device recombines, in an interleaved manner, packets received on the dual physical links and forwards the recombined packets in the interleaved manner on a single physical link at a second data rate, where the second data rate is twice the first data rate.

These and other embodiments will become apparent upon consideration of the following description and accompanying drawings.

### BRIEF DESCRIPTION OF THE DRAWINGS

FIG. 1 is a diagram illustrating one embodiment of a system.
FIG. 2 illustrates a diagram of one embodiment of a system for implementing precision timing of interleaved streams.
FIG. 3 is a diagram illustrating one embodiment of a scheme for doubling the speed of a data stream in an interleaved pattern.
FIG. 4 illustrates a diagram of one embodiment of a streaming device apparatus and corresponding network traffic results.
FIG. 5 illustrates a diagram of one embodiment of a system.
FIG. 6 illustrates a diagram of one embodiment of a system for interleaving multiple data streams with precision timing.
FIG. 7 is a generalized flow diagram illustrating one embodiment of a method for achieving precision timing when using dual interleaved streams to transmit continuous data.
FIG. 8 is a generalized flow diagram illustrating one embodiment of a method for achieving precision timing when using multiple interleaved streams to transmit continuous data.
FIG. 9 is a block diagram illustrating an example of a machine upon which one or more embodiments may be implemented.
FIG. 10 is a generalized flow diagram illustrating one embodiment of a method for adjusting transmission data rates using future timestamps.

While the methods and mechanisms described herein are susceptible to various modifications and alternative forms, specific embodiments are shown by way of example in the drawings and are herein described in detail. It should be understood, however, that drawings and detailed description thereto are not intended to limit the methods and mechanisms to the particular form disclosed, but on the contrary, are intended to cover all modifications, equivalents and alternatives apparent to those skilled in the art once the disclosure is fully appreciated.

### DETAILED DESCRIPTION

In the following description, numerous specific details are set forth to provide a thorough understanding of the methods and mechanisms presented herein. However, one having ordinary skill in the art should recognize that the various embodiments may be practiced without these specific details. In some instances, well-known structures, components, signals, computer program instructions, and techniques have not been shown in detail to avoid obscuring the approaches described herein. It will be appreciated that for simplicity and clarity of illustration, elements shown in the figures have not necessarily been drawn to scale. For example, the dimensions of some of the elements may be exaggerated relative to other elements.

This specification includes references to "one embodiment". The appearance of the phrase "in one embodiment" in different contexts does not necessarily refer to the same embodiment. Particular features, structures, or characteristics may be combined in any suitable manner consistent with this disclosure. Furthermore, as used throughout this application, the word "may" is used in a permissive sense (i.e., meaning having the potential to), rather than the mandatory sense (i.e., meaning must). Similarly, the words "include", "including", and "includes" mean including, but not limited to.

Terminology. The following paragraphs provide definitions and/or context for terms found in this disclosure (including the appended claims):

"Comprising." This term is open-ended. As used in the appended claims, this term does not foreclose additional structure or steps. Consider a claim that recites: "A system comprising an amplifier...." Such a claim does not foreclose the system from including additional components (e.g., a capacitor, a resistor, a central processing unit).

"Configured To." Various units, circuits, or other components may be described or claimed as "configured to" perform a task or tasks. In such contexts, "configured to" is used to connote structure by indicating that the units/circuits/components include structure (e.g., circuitry) that performs the task or tasks during operation. As such, the unit/circuit/component can be said to be configured to perform the task even when the specified unit/circuit/component is not currently operational (e.g., is not on). The units/circuits/components used with the "configured to" language include hardware-for example, circuits, memory storing program instructions executable to implement the operation, etc. Reciting that a unit/circuit/component is "configured to" perform one or more tasks is expressly intended not to invoke 35 U.S.C. § 112, paragraph (f), for that unit/circuit/component. Additionally, "configured to" can include generic structure (e.g., generic circuitry) that is manipulated by software and/or firmware (e.g., an FPGA or a general-purpose processor executing software) to operate in a manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks.

"Based On." As used herein, this term is used to describe one or more factors that affect a determination. This term does not foreclose additional factors that may affect a determination. That is, a determination may be solely based on those factors or based, at least in part, on those factors. Consider the phrase "determine A based on B." While B may be a factor that affects the determination of A, such a phrase does not foreclose the determination of A from also being based on C. In other instances, A may be determined based solely on B.

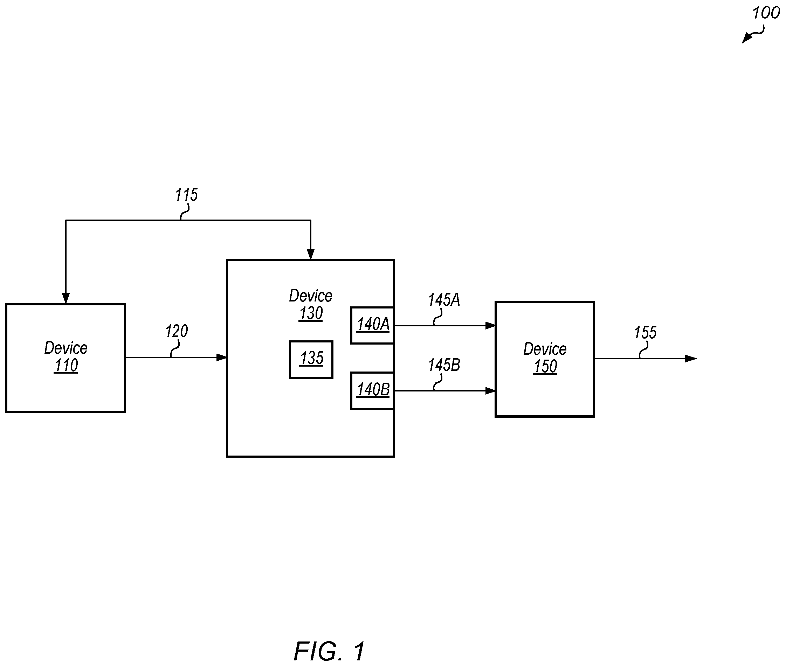

Referring now to FIG. 1, a block diagram of a system 100 is shown, in accordance with one or more embodiments. In an embodiment, system 100 includes at least device 110, interface 120, device 130, physical (PHY) links 145A-145B, and device 150. In other embodiments, system 100 may include other components in addition to those shown in FIG. 1. It is also noted that the components of system 100 may be arranged in other suitable manners different from what is shown in FIG. 1 in other embodiments.

In an embodiment, device 110 includes at least one processing unit (e.g., central processing unit (CPU), digital signal processor (DSP), field programmable gate array (FPGA), application specific integrated circuit (ASIC), graphics processing unit (GPU)). In this embodiment, device 110 may include and/or be coupled to one or more memory devices which store program instructions which are executable by the processing unit(s) of device 110 to perform various functions and/or operations. In other embodiments, device 110 may include other types of components and/or circuitry. Generally speaking, the operations performed by device 110 may be implemented using any suitable combination of hardware (e.g., processing units, circuitry) and software (e.g., program instructions).

In an embodiment, device 110 receives and/or generates data to be transmitted to device 130. The data may be partitioned into packets (e.g., User Datagram Protocol (UDP)) packets and sent over interface 120 to device 130. In one embodiment, device 130 is a network interface card (NIC) (e.g., Nvidia^{®} Bluefield-3 NIC) and interface 120 is a Peripheral Component Interconnect Express (PCIe) interface. In other embodiments, device 130 may be any of various other types of devices and/or interface 120 may be any of various other types of interfaces.

In an embodiment, device 110 may send the packets to device 130 over interface 120 with the knowledge that these packets will be sent from ports 140A-140B of device 130 to device 150 over dual PHY links 145A-145B and then recombined back into a single stream to be sent by device 150 over a single PHY link 155. Based on this knowledge, device 110 may implement a precision packet timing routine to ensure that the packets are correctly ordered when they are recombined back into the single stream on single PHY link 155. In an embodiment, device 110 implements the precision packet timing routine by generating timestamps and attaching the timestamps to the packets that are sent over interface 120. In an embodiment, for each pair of consecutive packets, device 110 attaches a future time stamp to each packet of the respective pair based on when device 130 should send each packet on PHY links 145A-145B. In this embodiment, a first future time stamp is assigned to a first packet of the pair and a second future time stamp, equal to the first future time stamp plus a relatively small offset value, is assigned to a second packet of the pair. This helps to ensure that each pair of packets will be sent in a correctly ordered fashion over the common PHY link 155 when the packet streams of PHY links 145A-145B are recombined by device 150. It is noted that a "relatively small offset" may also be referred to as an offset which is less than a threshold. The value of the threshold may vary according to the embodiment.

In an embodiment, to ensure that the future timestamps generated and attached to packets are synchronized with the local clock of device 130, device 110 may communicate with device 130 over channel 115 to share timing data. For example, at the beginning of packet transmission, device 110 may query device 130 for the value of a local clock of device 130. In response to receiving the query, device 130 may send the current time of the local clock to device 110. This allows device 110 to synchronize the generated future timestamps to the local clock on device 130. Channel 115 may be any type of bus, link, or interface suitable for sharing timing data between device 110 and 130.

In an embodiment, device 110 calculates future timestamps for each pair of packets based on the transmission data rate used on PHY links 145A-145B and based on when the pair of packets should be sent by device 130 onto PHY links 145A-145B. The future timestamps are then attached to each pair of packets that are sent on PHY links 145A-145B. For example, when each packet has a size of 8242 bytes, device 110 attaches a future timestamp to each packet every 824 nanoseconds (ns) and 412 ns for 80 Gbps and 160 Gbps throughput, respectively. The packet size of 8242 bytes may include 8192 Bytes of data with an additional 50 IP stack Bytes. In other embodiments, packets may have other sizes and/or the throughput data rate may have other values.

The packets with their attached future timestamps are sent over interface 120 to device 130. When device 130 receives the packets, the packets may be stored in queue 135. Device 130 may determine when to pull the packets out of queue 135 for sending on PHY links 145A-145B based on the future timestamps attached to the packets. In an embodiment, the future timestamps ensure that when device 130 sends the packets in an alternating manner on PHY links 145A-145B to device 150, the packets will maintain the correct ordering needed for device 150 to combine them in an interleaved manner to be used locally on device 150 and/or to be sent on the single PHY link 155 to another device or system.

In an embodiment, a first packet may be sent on PHY link 145A, a second packet may be sent on PHY link 145B, a third packet may be sent on PHY link 145A, a fourth packet may be sent on PHY link 145B, and so on. In this example, the first packet refers to a first chunk of data from the original data stream or original data file, the second packet refers to a second chunk of data that is subsequent to the first chunk of data within the original data stream/file, the third packet refers to a third chunk of data that is subsequent to the second chunk of data within the original data stream/file, and so on. In an embodiment, the packets with their attached future timestamps are sent in an alternating manner on PHY links 145A-145B to device 150. In one embodiment, PHY links 145A-145B are Ethernet links and packets sent over PHY links 145A-145B are transmitted in conformance with the Ethernet protocol. In other embodiments, other types of links (e.g., Fiber Channel links) and/or other protocols may be employed.

Many advantages may be attained by the approaches described in relation to system 100 of FIG. 1. For example, one advantage is enabling the throughput of data on single PHY link 155 to be twice the throughput as PHY links 145A-145B. Another advantage is that the data rates of PHY links 145A-145B and PHY link 155 may be non-standard data rates. As used herein, the term "non-standard data rate" may be defined as a data rate which is not supported by the IEEE 802.3 standard. For example, in one embodiment, PHY links 145A-145B may transmit data at 80 gigabits per second (Gbps) while PHY link 155 carries data at 160 Gbps. In other embodiments, other non-standard data rates may be utilized. Examples of standard data rates include 100 Gbps or 200 Gbps that are commonly supported by Ethernet PHY high-speed links. It should be understood that any standard data rate, including but not limited to 100 Gbps or 200 Gbps, may still be utilized by the architecture depicted in FIG. 1.

A further advantage is that precise timing may be achieved between packets that are combined. A still further advantage is that a device 150 may be employed which is not able to rearrange the order of packets sent over PHY links 145A-145B. While several advantages of the approaches have been presented, it should be understood that these are non-limiting examples of advantages. Other advantages of the approaches described herein are possible and are contemplated.

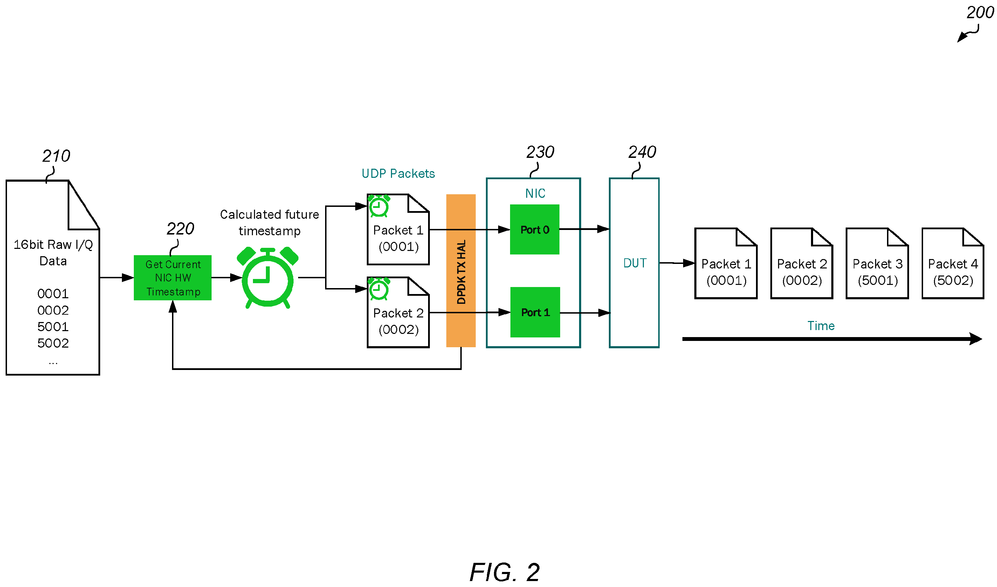

Turning now to FIG. 2, a diagram of a system 200 for implementing precision timing of interleaved streams is shown, in accordance with one or more embodiments. In one embodiment, system 200 may generate or receive raw data 210 for streaming. In one embodiment, data 210 may be raw 16-bit in-phase (I) and quadrature (Q) data. In other words, in this embodiment, data 210 includes an I component and a Q component. The I and Q components allow for efficient modulation and demodulation in digital communications. The I component is the real part of the signal, while the Q component is the imaginary part of the signal which is 90 degrees out of phase with the I component. In other embodiments, data 210 may be any of various other types of data (e.g., video data, telemetry data).

To prepare data 210 for streaming, data 210 may be packetized. In other words, data 210 may be partitioned into chunks of data, and then a header may be added to each chunk of data. Each chunk of data, along with its corresponding header, is referred to as a "packet". In an embodiment, data 210 is partitioned into equal-sized packets. In another embodiment, data 210 is partitioned into variable-sized packets. In some embodiments, data packets may be equal-sized, but control packets may be of a different size than data packets. In one embodiment, data 210 may be packetized by software executing on a processing unit. In one embodiment, the program framework for the software may be based on the Data Plane Development Kit (DPDK) which provides a set of data plane libraries and NIC polling-mode drivers for offloading TCP packet processing from the operating system kernel to processes running in user space. In other embodiments, other software programming frameworks may be utilized. In another embodiment, data 210 may be packetized by dedicated circuitry (e.g., an FPGA). In other embodiments, data 210 may be packetized using any suitable combination of hardware and/or software.

Prior to the packets being forwarded to network interface card (NIC) 230, future timestamps may be calculated and attached to the packets. A future timestamp refers to the time each packet should be forwarded from NIC 230 to device under test (DUT) hardware 240. In order for software to generate timestamps that are synchronized with the local time of NIC 230, the current NIC hardware timestamp is obtained, as represented by block 220 of FIG. 2. For each packet, a future timestamp is calculated and attached to the packet which is forwarded to NIC 230. Next, NIC 230 determines when to forward packets to DUT hardware 240 based on the attached timestamps. In the example of system 200, there are two physical (PHY) links for sending data from NIC 230 to DUT hardware 240. However, it should be understood that this is merely indicative of one particular embodiment. In other embodiments, there may be other numbers (e.g., 4, 8) of PHY links between NIC 230 and DUT hardware 240. In an embodiment, the output of DUT hardware 240 is a single stream of interleaved packets.

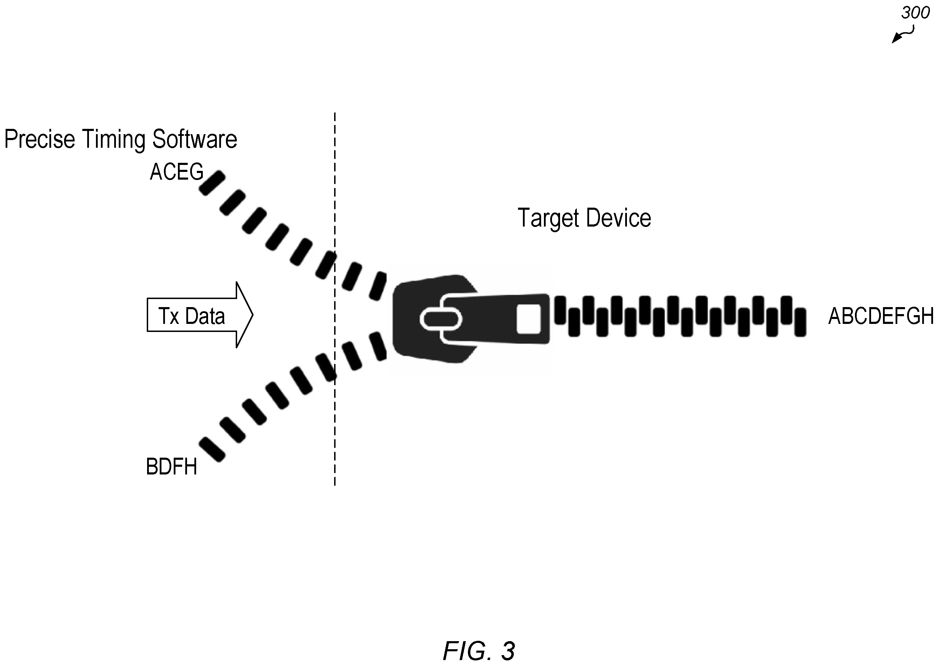

Referring now to FIG. 3, a diagram of a scheme for doubling the speed of a data stream in an interleaved pattern is shown, in accordance with one or more embodiments. FIG. 3 illustrates at a high level the concept of combining data streams from parallel physical (PHY) links into a single, higher-speed PHY link. As can be seen on the left-side of FIG. 3, the letters A, C, E, and G are representative of different packets being transmitted on a first PHY link, while the letters B, D, F and H are representative of different packets being transmitted in parallel on a second PHY link. Precision timing software may be executed on a processing unit (e.g., a CPU) to generate time stamps which are assigned to the packets that are transmitted on the first and second PHY links, with the time stamps determining the order of transmission of the packets when they are combined into a single output PHY link.

The right-side of FIG. 3 illustrates the result of combining the data from the first and second PHY links to a third PHY link on the target device (e.g., DUT 240 of FIG. 2). As shown on the right-side of FIG. 3, the interleaved data on the third PHY link is represented by the letters in the following order: A, B, C, D, E, F, G, and H. This generation of interleaved data is analogous to the function of a physical zipper combining two rows of interlocking teeth.

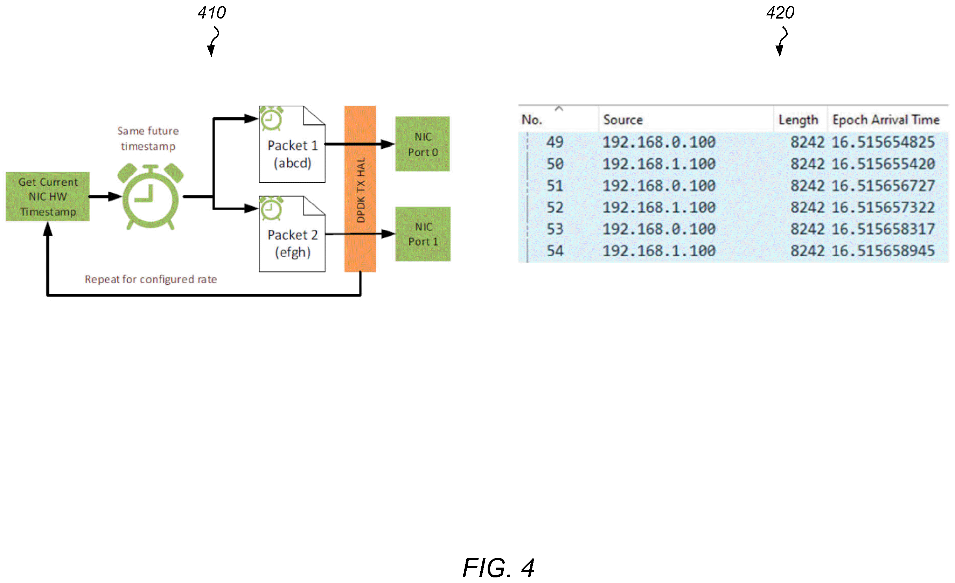

Turning now to FIG. 4, a diagram of a streaming device apparatus 410 and corresponding network traffic results 420 is shown, in accordance with one or more embodiments. On the left-side of FIG. 4, sample operations of a streaming device apparatus 410 are illustrated in accordance with one embodiment, with a same future timestamp attached to each pair of packets that are sent on first and second PHY links. As illustrated in FIG. 4, a first packet "Packet 1" is sent on a first PHY link to NIC port 0 while a second packet, "Packet 2" is sent on a second PHY link to NIC port 1. In one embodiment, each pair of packets that is sent on the parallel PHY links may be assigned the same future timestamp to ensure that the packets are sent in an interleaved manner out of the NIC. In another embodiment, a slight offset is added to the future timestamp, and the sum of the future timestamp and the slight offset is attached to the second packet of the pair, while the original future timestamp is attached to the first packet of the pair. On the right-side of FIG. 4, network traffic results 420 are shown which correspond to an example of full-duplex interleaved packets sent at 40 Gbps according to the setup shown for streaming device apparatus 410. Network traffic results 420 include alternating source Internet Protocol (IP) addresses which correspond to the interleaved packets.

In an embodiment, host software for executing operations of streaming device apparatus 410 may be developed using Data Plane Development Kit (DPDK) and the 5T-or-5G Packet Pacing drivers. DPDK is an open source software project managed by the Linux Foundation^{®}, while 5T-for-5G is time-triggered transmission technology for telecommunications. In an embodiment, the host software enables future timestamps to be attached to packets, which offloads to the NIC to determine the exact time to transmit the packets, ensuring relatively high precision timing. In an embodiment, the host software allows for transmitting at any non-IEEE (Institute of Electrical and Electronics Engineers) standard data rate on a single PHY by querying the NIC's hardware timestamp and calculating the required future time offset for each packet based on the size of the packet. For jumbo size packets (8192 + IP stack bytes), software attaches timestamps to each packet every 824 ns and 412 ns for 80 Gbps and 160 Gbps throughput, respectively.

In an embodiment, the two PHYs of apparatus 410 may be synchronized by splitting the packetized data and attaching the same future timestamp to each contiguous packetized data pair. In another embodiment, a small offset is used to differentiate between the first packet of the pair and the second packet of the pair. Each packet of the pair is sent to a separate PHY for synchronized transmission using the NIC hardware offsets. In an embodiment, this approach enables synchronized dual-PHY transmission at any non-IEEE standard data rate. In an embodiment, this approach also enables stream alignment between separate PHYs.

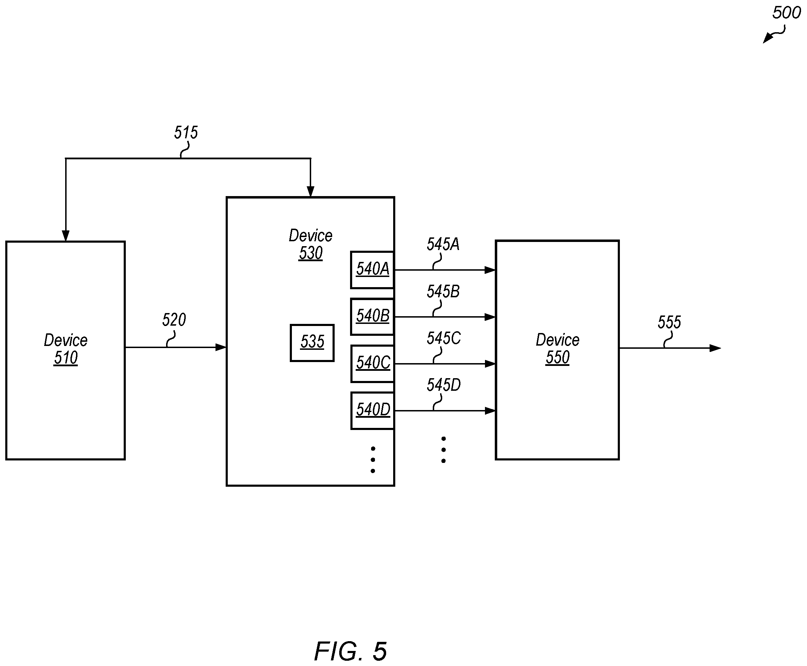

Referring now to FIG. 5, a diagram of a system 500 is shown, in accordance with one or more embodiments. System 500 is similar to system 100 (of FIG. 1) except that system 500 includes four PHY links 545A-545D between device 530 and device 550 rather than the two PHY links 145A-145B of system 100. Additionally, device 530 has four separate output ports 540A-540D. The other components (e.g., device 510, channel 515, interface 520, queue 535, device 550, PHY link 555) are analogous to the corresponding components of system 100.

In the example configuration shown in FIG. 5 for system 500, packets may be sent over the four different PHY links 545A-545D and then recombined by device 550 to be sent over a single PHY link 555. Additionally, in the example architecture shown in FIG. 5, device 510 may be configured to generate future timestamps for each set of four packets and then attach the future timestamps to the four packets which are sent on interface 520 to device 530. In an embodiment, this helps to ensure that the packets are sent by device 530 on the four parallel PHY links 545A-545D at the appropriate times.

It is noted that while four different PHY links 545A-545D are shown in system 500, other embodiments of system 500 may include other numbers of PHY links between device 530 and device 550. For example, in another embodiment, there may be three parallel PHY links, while a further embodiment may have eight parallel PHY links, while a still further embodiment may have 16 parallel PHY links, and so on. Generally speaking, the techniques described herein may be employed when sending packets over any number "N" of parallel PHY links, where "N" is a positive integer greater than one.

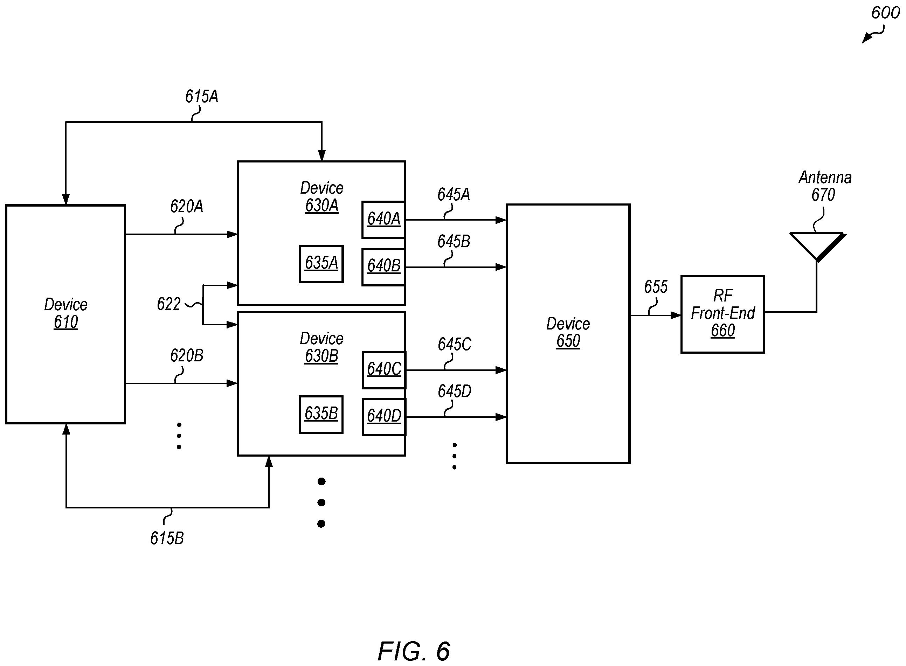

Turning now to FIG. 6, an example of a system 600 for interleaving multiple data streams with precision timing is shown, in accordance with one or more embodiments. In an embodiment, system 600 includes device 610, devices 630A-630B, PHY links 645A-645D, device 650, RF front-end 660, and antenna 670. In other embodiments, system 600 may include one or more additional components not shown in FIG. 6, omit one or more of the depicted components, and/or be arranged in other suitable manners.

In an embodiment, device 610 includes one or more processing units (e.g., CPUs) coupled to one or more memory devices for storing program instructions executable by the one or more processing units. The processing unit(s) may execute an operating system (OS) (e.g., Linux^{®} OS), one or more software applications, and/or various types of programs. In one embodiment, device 610 is a motherboard connected to a backplane, with the backplane connected to one or more additional processing devices (e.g., devices 630A-630B). In other embodiments, device 610 may be any of various other types of devices.

It is noted that devices 630A-630B are representative of any number of devices that may be included in between device 610 and device 650 for forwarding data from device 610 and device 650. In other words, while two devices 630A-630B are shown in FIG. 6, other implementations of system 600 may include one device, three devices, four devices, five devices, and so on. In one embodiment, devices 630A-630B are NICs. In other embodiments, devices 630A-630B may be other types of devices.

In an embodiment, device 610 generates packets to be sent via connections 620A-620B to devices 630A-630B, respectively. In an embodiment, connections 620A-620B are PCIe bus connections. In other embodiments, device 610 may utilize other types of connections to send packets to devices 630A-630B. In order to ensure proper ordering of the packets further along in the communication pipeline, device 610 may be configured to calculate future timestamps for the generated packets and then attach the calculated future timestamps to the packets as they are sent to devices 630A-630B. In an embodiment, device 610 retrieves local clock times from device 630A-630B via connections 615A-615B, respectively. Device 610 may utilize the local clock times of devices 630A-630B to ensure the calculated future timestamps are synchronized to the local clocks of devices 630A-630B.

When devices 630A-630B receive the packets with the attached timestamps, devices 630A-630B may store the received packets in queues 635A-635B, respectively. Then, device 630A may determine, based on the attached timestamps, when to pull packets out of queue 635A for forwarding on PHY links 645A-645B, via ports 640A-640B, to device 650. In an embodiment, device 630A may send packets in an alternating manner on PHY links 645A-645B such that a first packet is sent on PHY link 645A, a second packet is sent on PHY link 645B, a third packet is sent on PHY link 645A, a fourth packet is sent on PHY link 645B, and so on.

Similarly, device 630B may utilize the timestamps when determining when to pull packets out of queue 635B for forwarding on PHY links 645C-645D, via ports 640C-640D, to device 650. In an embodiment, device 630B may send packets in an alternating manner on PHY links 645C-645D such that a first packet is sent on PHY link 645C, a second packet is sent on PHY link 645D, a third packet is sent on PHY link 645C, a fourth packet is sent on PHY link 645D, and so on.

In order to synchronize the timing of packets sent out PHY links 645A-645B in relation to the timing of packets sent out PHY links 645C-645D, device 630A and device 630B may share respective local clock data with each other via connection 622. In an embodiment, one of devices 630A-630B may be a primary device (i.e., master device) and the other device may be a subordinate device. In this embodiment, the primary device will initiate synchronization of the devices 630A-630B. This scheme may also be employed when more than two devices are deployed between device 610 and 650, where a master device 630A may coordinate synchronization of the local clock data among all of the devices.

In an embodiment, devices 630A-630B removes the timestamps from the packets which are forwarded to device 650. The packets which are received by device 650 may be aligned based on the synchronization of local clocks between devices 630A-630B and based on when the packets are pulled out of queues 635A-635B for transmission on PHYs 645A-645D. In an embodiment, this alignment between packets allows device 650 to interleave the packets together in a predetermined pattern. For example, device 650 may interleave packets together for sending on single PHY link 655 by starting with a packet from PHY link 645A, followed by a packet from PHY link 645B, followed by a packet from PHY link 645C, followed by a packet from PHY link 645D, and so on. In other words, in one embodiment, the order may go as follows: PHY link 645A packet, PHY link 645B packet, PHY link 645C packet, PHY link 645D packet, PHY link 645A packet, PHY link 645B packet, PHY link 645C packet, PHY link 645D packet, and continuing with this pattern. In another embodiment, the reverse order may be used, going as follows: PHY link 645D packet, PHY link 645C packet, PHY link 645B packet, PHY link 645A packet, and continuing with this pattern. In a further embodiment, an alternative order such as PHY link 645A packet, PHY link 645C packet, PHY link 645B packet, PHY link 645D packet, and so on could be used. Other orders, depending on what the DUT requires, could also be utilized.

In an embodiment, the interleaved packets sent by device 650 on single PHY link 655 may be forwarded to RF front-end 660. In other embodiments, device 650 may be coupled to other types of components besides RF front-end 660. In an embodiment, RF front-end 660 may be coupled to antenna 670. Antenna 670 may be used in a wide variety of applications to transmit and/or receive radio frequency (RF) signals. An antenna is a device that serves as an interface between electric currents moving in metal conductors and radio waves propagating wirelessly through space. Examples of applications that may use antenna 670 include ultrasound, radar, satellite, military, radio access network (RAN) communications, wireless communications, cellular communications, and other applications.

In an embodiment, device 650 is a beamforming platform and antenna 670 includes an array of antennas. An antenna array can enable a beamformer to steer an electromagnetic radiation pattern in a desired direction, which generates a main beam in the desired direction and side lobes in other directions. When beamforming is performed in the digital domain, this is referred to as "digital beamforming". In other embodiments, device 650 is incorporated into other types of platforms.

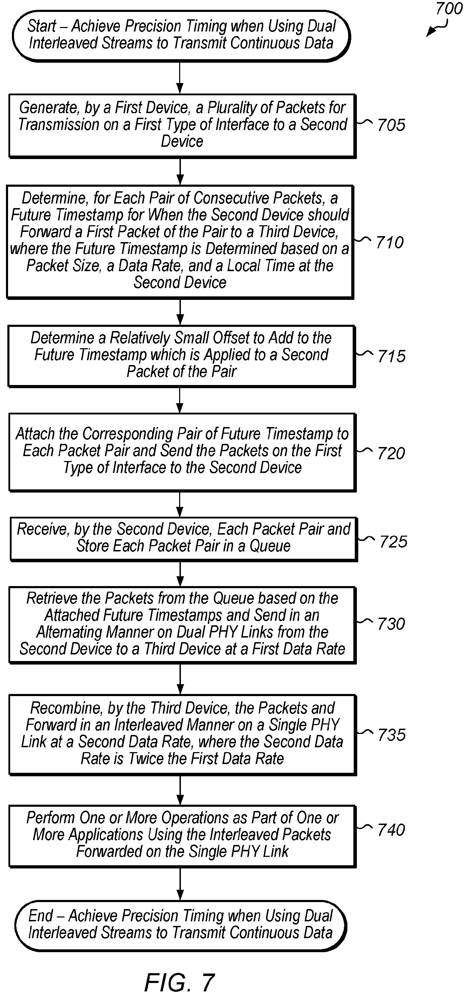

Referring now to FIG. 7, one embodiment of a method for achieving precision timing when using dual interleaved streams to transmit continuous data is shown. The components embodied in any of the apparatuses or systems previously described above may generally operate in accordance with method 700. In addition, the steps in this embodiment are shown in sequential order. However, some steps may occur in a different order than shown, some steps may be performed concurrently, some steps may be combined with other steps, other steps may be added, and some steps may be absent in another embodiment.

A first device (e.g., device 110 of FIG. 1) generates a plurality of packets for transmission on a first type of interface to a second device (block 705). In one embodiment, the first device receives a data stream and partitions the data stream into a plurality of packets (e.g., a plurality of User Datagram Protocol (UDP) packets). In another embodiment, the first device receives the plurality of packets from another component. In a further embodiment, the first device retrieves, from one or more memory devices, the plurality of packets which are to be transmitted to the second device. In other embodiments, the first devices utilizes any of various other ways of creating the plurality of packets.

Next, the first device determines, for each pair of consecutive packets, a future timestamp for when the second device should forward a first packet of the pair to a third device, where the future timestamp is determined based on a size of the packets, a data rate, and a local time at the second device (block 710). Then, the first device determines a relatively small offset to add to the future timestamp which is applied to a second packet of the pair (block 715). The size of the relatively small offset may vary according to the embodiment. In some embodiments, the first device applies the same future timestamp to both the first packet and the second packet. In other words, in these embodiments, the relatively small offset is zero.

Next, the first device attaches the corresponding pair of future timestamps to each packet pair and sends the packets on the first type of interface to the second device (block 720). In other words, the first device attaches the future timestamp to the first packet of the pair and the first device attaches the sum of the future timestamp and the relatively small offset to the second packet of the pair. Then, the second device receives each packet pair from the first device and stores each packet pair in a queue (block 725).

Next, the second device retrieves the packets from the queue based on the attached future timestamps and sends, at a first data rate, the packets in an alternating manner on dual PHY links to a third device (block 730). Sending a pair of packets in an alternating manner involves sending a first packet of the pair on a first PHY link and sending a second packet of the pair on a second PHY link. In some embodiments, the first packet and the second packet (of each packet pair) leave the first device at the same time and are received by the second device at the same time. In these embodiments, the second device may be programmed to process the packet on a first port (e.g., port A) before a second port (e.g., port B) when receiving packets at exactly the same time. Next, the third device recombines the packets based on which PHY link each packet is received and then the third device forwards the packets in an interleaved manner on a single PHY link at a second data rate, where the second data rate is twice the first data rate (block 735). Then, one or more operations are performed as part of one or more applications using the interleaved packets forwarded on the single PHY link (block 740). In one embodiment, a fourth device (e.g., RF front-end 660 of FIG. 6) uses the interleaved packets received on the single PHY link as part of a beamforming application. In other embodiments, the interleaved packets forwarded on the single PHY link are used as part of other types of applications. After block 740, method 700 may end.

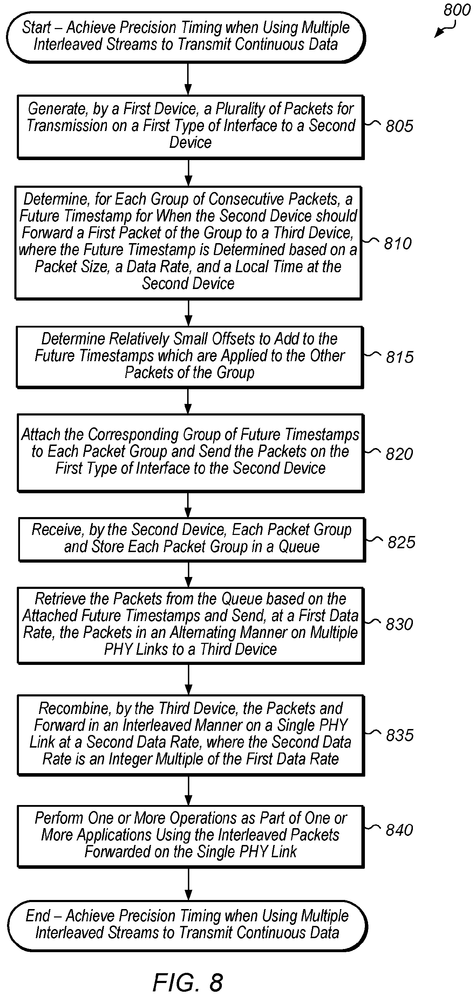

Turning now to FIG. 8, one embodiment of a method for achieving precision timing when using multiple interleaved streams to transmit continuous data is shown. The components embodied in any of the apparatuses or systems previously described above may generally operate in accordance with method 800. In addition, the steps in this embodiment are shown in sequential order. However, some steps may occur in a different order than shown, some steps may be performed concurrently, some steps may be combined with other steps, other steps may be added, and some steps may be absent in another embodiment.

A first device (e.g., device 110 of FIG. 1) generates a plurality of packets for transmission on a first type of interface to a second device (block 805). Next, the first device determines, for each group of consecutive packets, a future timestamp for when the second device should forward a first packet of the group to a third device, where the future timestamp is determined based on a size of the packets, a data rate, and a local time at the second device (block 810). Each group of consecutive packets refers to a non-overlapping group of packets. It is noted that each group of consecutive packets corresponds to a number of PHY links between the second device and the third device. In other words, the number of packets in each group is equal to the number of PHY links between the second and third devices. For example, for system 100 (of FIG. 1), each group will include two packets which will be transmitted synchronously on the two PHY links 145A-145B between device 130 and device 150. For the example of system 500 (of FIG. 5), each group will include four packets which will be transmitted synchronously on the four PHY links 545A-545D between device 530 and device 550.

After block 810, the first device determines relatively small offsets to add to the future timestamps which are applied to other packets of the group (block 815). For example, the first device may add a first offset to the future timestamp to apply to a second packet of the group, the first device may add a second offset to the future timestamp to apply to a third packet of the group, the first device may add a third offset to the future timestamp to apply to a fourth packet of the group, and so on. It is assumed for the purposes of this discussion that the second offset is greater than the first offset, the third offset is greater than the second offset, and so on. The sizes of the relatively small offsets may vary according to the embodiment.

Next, the first device attaches the corresponding group of future timestamps to each packet group and sends the packets on the first type of interface to the second device (block 820). In other words, the first device attaches the future timestamp to the first packet of the group, the first device attaches the sum of the future timestamp and a first relatively small offset to the second packet of the group, the first device attaches the sum of the future timestamp and a second relatively small offset to the third packet of the group, and so on. In one embodiment, the purpose of the relatively small offsets is to let the second device know that the second packet of the group should be sent on a second PHY link, the third packet of the group should be sent on a third PHY link, etc., while the first packet of the group is sent on a first PHY link. Then, the second device receives each packet group from the first device and stores each packet group in a queue (block 825).

Next, the second device retrieves the packets from the queue based on the attached future timestamps and sends, at a first data rate, the packets in an alternating manner on multiple PHY links to a third device (block 830). Sending a group of packets in an alternating manner involves sending a first packet of the group on a first PHY link, sending a second packet of the group on a second PHY link, sending a third packet of the group on a third PHY link, and so on. Next, the third device recombines the packets based on which PHY link each packet is received and then the third device forwards the packets in an interleaved manner on a single PHY link at a second data rate, where the second data rate is an integer multiple of the first data rate (block 835). Then, one or more operations are performed as part of one or more applications using the interleaved packets forwarded on the single PHY link (block 840). After block 840, method 800 may end.

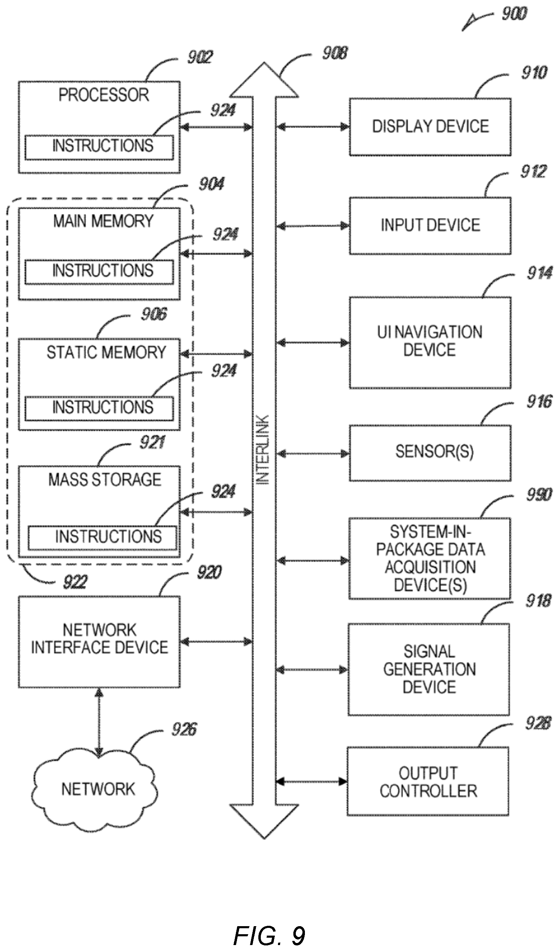

Turning now to FIG. 9, a block diagram of an example machine 900 upon which any one or more of the techniques (e.g., methodologies) discussed herein may be performed is shown. In various embodiments, the machine 900 may operate as a standalone device or may be connected (e.g., networked) to other machines which may include at least a portion of the components shown in FIGs 1-6. Alternatively and/or additionally, the machine 900 may include at least a portion of the circuitry shown in FIGs 1-6. While the machine 900 is shown as including a plurality of components in FIG. 9, it should be understood that this is merely indicative of one embodiment. In other embodiments, one or more of the components shown in FIG. 9 may be omitted from the machine 900. Additionally, in further embodiments, one or more components not shown in FIG. 9 may be included in the machine 900.

In a networked deployment, the machine 900 may operate in the capacity of a server machine, a client machine, or both in server-client network environments. In an example, the machine 900 may act as a peer machine in a peer-to-peer (P2P) (or other distributed) network environment. The machine 900 may be a computer system, a personal computer (PC), a tablet PC, a set-top box (STB), a personal digital assistant (PDA), a mobile telephone, a web appliance, an IoT device, an automotive system, an aerospace system, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as via cloud computing, software as a service (SaaS), or other computer cluster configurations.

Examples, as described herein, may include, or may operate by, logic, components, devices, packages, or mechanisms. Circuitry is a collection (e.g., set) of circuits implemented in tangible entities that include hardware (e.g., simple circuits, gates, logic). Circuitry membership may be flexible over time and underlying hardware variability. Circuitries include members that may, alone or in combination, perform specific tasks. In an example, hardware of the circuitry may be immutably designed to carry out a specific operation (e.g., hardwired). In an example, the hardware of the circuitry may include variably connected physical components (e.g., execution units, transistors, simple circuits) including a computer-readable medium physically modified (e.g., magnetically, electrically, by moveable placement of invariant-massed particles) to encode instructions of the specific operation. In connecting the physical components, the underlying electrical properties of a hardware constituent are changed, for example, from an insulator to a conductor or vice versa. The instructions enable participating hardware (e.g., the execution units or a loading mechanism) to create members of the circuitry in hardware via the variable connections to carry out portions of the specific tasks when in operation. Accordingly, the computer-readable medium is communicatively coupled to the other components of the circuitry when the device is operating. In an example, any of the physical components may be used in more than one member of more than one circuit. For example, under operation, execution units may be used in a first circuit of first circuitry at one point in time and reused by a second circuit in the first circuitry, or by a third circuit in second circuitry, at a different time.

The machine 900 may include a hardware processor 902 (e.g., a central processing unit (CPU), a graphics processing unit (GPU)), a main memory 904, and a static memory 906, some or all of which may communicate with each other via an interlink 908. Interlink 908 may also be referred to as a bus. The machine 900 may further include a display device 910, an alphanumeric input device 912 (e.g., a keyboard), and a user interface (UI) navigation device 914 (e.g., a mouse). In an example, the display device 910, alphanumeric input device 912, and UI navigation device 914 may be touchscreen displays. The machine 900 may additionally include a storage device 922 (e.g., drive unit); a signal generation device 918 (e.g., a speaker); a network interface device 920; one or more sensors 916, such as a Global Positioning System (GPS) sensor, wing sensor, mechanical device sensor, temperature sensor, bridge sensor, audio sensor, industrial sensor, a compass, an accelerometer, or other sensors; and one or more system-in-package data acquisition devices 990. The machine 900 may include an output controller 928, such as a serial (e.g., universal serial bus (USB)), parallel, or other wired or wireless (e.g., infrared (IR), near field communication (NFC)) connection to communicate with or control one or more peripheral devices (e.g., a printer, card reader).

The storage device 922 may include a machine-readable storage medium on which is stored one or more sets of data structures or instructions 924 (e.g., software) embodying or utilized by any one or more of the techniques or functions described herein. The instructions 924 may also reside, completely or at least partially, within the main memory 904, within the static memory 906, or within the hardware processor 902 during execution thereof by the machine 900. In an example, one or any combination of the hardware processor 902, the main memory 904, the static memory 906, or the storage device 922 may constitute the machine-readable storage medium. While the machine-readable storage medium is illustrated as a single medium, the term "machine-readable storage medium" may include a single medium or multiple media (e.g., a centralized or distributed database, or associated caches and servers) configured to store the one or more instructions 924.

The term "machine-readable storage medium" may include any transitory or non-transitory medium that is capable of storing, encoding, or carrying transitory or non-transitory instructions for execution by the machine 900 and that cause the machine 900 to perform any one or more of the techniques of the present disclosure, or that is capable of storing, encoding, or carrying data structures used by or associated with such instructions. Non-limiting machine-readable storage medium examples may include solid-state memories and optical and magnetic media. In an example, a massed machine-readable storage medium comprises a machine-readable medium with a plurality of particles having invariant (e.g., rest) mass. Accordingly, massed machine-readable storage media are not transitory propagating signals. Specific examples of massed machine-readable storage media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 924 (e.g., software, programs, an operating system (OS)) or other data that are stored on the storage device 921 may be accessible via main memory 904 for use by the hardware processor 902. The main memory 904 (e.g., DRAM) is typically fast, but volatile, and thus a different type of storage from the storage device 921 (e.g., an SSD), which is suitable for long-term storage, including while in an "off" condition. The instructions 924 or data in use by a user or the machine 900 are typically loaded in the main memory 904 for use by the hardware processor 902. When the main memory 904 is full, virtual space from the storage device 921 can be allocated to supplement the main memory 904. However, because the storage device 921 is typically slower than the main memory 904, and write speeds are typically at least twice as slow as read speeds, use of virtual memory can greatly reduce user experience due to storage device latency (in contrast to the main memory 904). Further, use of the storage device 921 for virtual memory can greatly reduce the usable lifespan of the storage device 921.

The instructions 924 may further be transmitted or received over a communications network 926 using a transmission medium via the network interface device 920 utilizing any one of a number of transfer protocols (e.g., frame relay, internet protocol (IP), transmission control protocol (TCP), user datagram protocol (UDP), hypertext transfer protocol (HTTP)). Example communication networks may include a local area network (LAN), a wide area network (WAN), a packet data network (e.g., the Internet), mobile telephone networks (e.g., cellular networks), Plain Old Telephone Service (POTS) networks, and wireless data networks (e.g., Institute of Electrical and Electronics Engineers (IEEE) 802.11 family of standards known as Wi-Fi^{®}, IEEE 802.16 family of standards known as WiMax^{®}, IEEE 802.15.4 family of standards, P2P networks), among others. In an example, the network interface device 920 may include one or more physical jacks (e.g., Ethernet, coaxial, or phone jacks) or one or more antennas to connect to the communications network 926. In an example, the network interface device 920 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any tangible or intangible medium that is capable of storing, encoding, or carrying instructions for execution by the machine 900, and includes digital or analog communications signals or other tangible or intangible media to facilitate communication of such software.

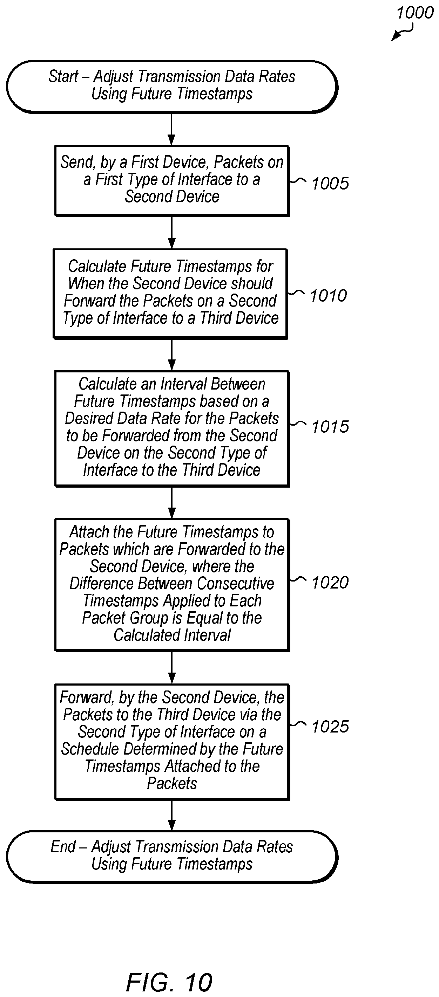

Turning now to FIG. 10, one embodiment of a method for adjusting transmission data rates using future timestamps is shown. The components embodied in any of the apparatuses or systems previously described above may generally operate in accordance with method 1000. In addition, the steps in this embodiment are shown in sequential order. However, some steps may occur in a different order than shown, some steps may be performed concurrently, some steps may be combined with other steps, other steps may be added, and some steps may be absent in another embodiment.

A first device (e.g., device 110 of FIG. 1) sends packets on a first type of interface (e.g., PCIe interface) to a second device (e.g., device 130) (block 1005). The first device calculates future timestamps for when the second device should forward the packets on a second type of interface (e.g., Ethernet interface) to a third device (block 1010). The first device calculates an interval between future timestamps based on a desired data rate for the packets to be forwarded from the second device on the second type of interface to the third device (block 1015). For example, as the interval between future timestamps attached to packets is increased, the data rate for packets being forwarded from the second device on the second type of interface to the third device is reduced. Alternatively, as the interval between future timestamps attached to packets is decreased, the data rate for packets being forwarded from the second device on the second type of interface to the third device is increased. It is noted that the calculated interval may be applied to a group of future timestamps that are generated. For example, in one embodiment, the first device may send pairs of packets to the second device on dual PHY links, and in this embodiment, the interval refers to the difference between a first timestamp applied to a first packet of a first pair and a second timestamp applied to a first packet of a second pair, where the first pair and second pair are consecutive pairs of packets sent over the dual PHY links.

Next, the first device attaches the future timestamps to packets which are forwarded to the second device, where the difference between consecutive timestamps applied to each packet group is equal to the calculated interval (block 1020). In an embodiment, the first device sends multiple packets in parallel over multiple PHY links to the second device. The second device forwards the packets to the third device via the second type of interface on a schedule determined by the future timestamps attached to the packets (block 1025). In this way, the first device may control and/or adjust the data rate at which packets are forwarded from the second device on the second type of interface to the third device. After block 1025, method 1000 may end.

The systems and methods disclosed herein can be embodied in various forms including, for example, a data processor, such as a computer that also includes a database, digital electronic circuitry, firmware, software, or in combinations of them. Moreover, the above-noted features and other aspects and principles of the present disclosed implementations can be implemented in various environments. Such environments and related applications can be specially constructed for performing the various processes and operations according to the disclosed implementations or they can include a general-purpose computer or computing platform selectively activated or reconfigured by code to provide the necessary functionality. The processes disclosed herein are not inherently related to any particular computer, network, architecture, environment, or other apparatus, and can be implemented by a suitable combination of hardware, software, and/or firmware. For example, various general-purpose machines can be used with programs written in accordance with teachings of the disclosed implementations, or it can be more convenient to construct a specialized apparatus or system to perform the required methods and techniques.

Although ordinal numbers such as first, second and the like can, in some situations, relate to an order; as used in a document ordinal numbers do not necessarily imply an order. For example, ordinal numbers can be merely used to distinguish one item from another. For example, to distinguish a first event from a second event, but need not imply any chronological ordering or a fixed reference system (such that a first event in one paragraph of the description can be different from a first event in another paragraph of the description.

It is noted that the above-described embodiments may comprise software and/or computer programs. These computer programs, which can also be referred to programs, software, software applications, applications, components, or code, include program instructions (i.e., machine instructions) for a programmable processor, and can be implemented in a high-level procedural and/or object-oriented programming language, and/or in assembly/machine language. As used herein, the term "machine-readable storage medium" refers to any computer program product, apparatus and/or device, such as for example magnetic discs, optical disks, memory, and Programmable Logic Devices (PLDs), used to provide machine instructions and/or data to a programmable processor, including a machine-readable storage medium that receives program instructions as a machine-readable signal. The term "machine-readable signal" refers to any signal used to provide machine instructions and/or data to a programmable processor. The machine-readable storage medium can store such program instructions non-transitorily, such as for example would a non-transient solid-state memory or a magnetic hard drive or any equivalent storage medium. The machine-readable storage medium can alternatively or additionally store such machine instructions in a transient manner, such as would a processor cache or other random-access memory associated with one or more physical processor cores.

In various embodiments, the program instructions that implement the methods and/or mechanisms may be conveyed or stored on a non-transitory computer readable storage medium. Numerous types of media which are configured to store program instructions are available and include hard disks, floppy disks, CD-ROM, DVD, flash memory, Programmable ROMs (PROM), random access memory (RAM), and various other forms of volatile or non-volatile storage.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including a connection over a network (e.g., the Internet, a wireless wide area network, a local area network, a wide area network, a wired network, or the like), via a direct connection between one or more of the multiple computing systems, etc.

To provide for interaction with a user, the subject matter described herein can be implemented on a computer having a display device, such as for example a cathode ray tube (CRT) or a liquid crystal display (LCD) monitor for displaying information to the user and a keyboard and a pointing device, such as for example a mouse or a trackball, by which the user can provide input to the computer. Other kinds of devices can be used to provide for interaction with a user as well. For example, feedback provided to the user can be any form of sensory feedback, such as for example visual feedback, auditory feedback, or tactile feedback; and input from the user can be received in any form, including acoustic, speech, or tactile input.

The subject matter described herein can be implemented in a computing system that includes a back-end component, such as for example one or more data servers, or that includes a middleware component, such as for example one or more application servers, or that includes a front-end component, such as for example one or more client computers having a graphical user interface or a web browser through which a user can interact with an implementation of the subject matter described herein, or any combination of such back-end, middleware, or front-end components. The components of the system can be interconnected by any form or medium of digital data communication, such as for example a communication network. Examples of communication networks include, but are not limited to, a local area network ("LAN"), a wide area network ("WAN"), and the Internet.

A computing system may include clients and servers. A client and server are generally, but not exclusively, remote from each other and typically interact through a communication network. The relationship of client and server arises by virtue of computer programs running on the respective computers and having a client-server relationship to each other.

In various embodiments, one or more portions of the methods and mechanisms described herein may form part of a cloud-computing environment. In such embodiments, resources may be provided over the Internet as services according to one or more various models. Such models may include Infrastructure as a Service (IaaS), Platform as a Service (PaaS), and Software as a Service (SaaS). In IaaS, computer infrastructure is delivered as a service. In such a case, the computing equipment is generally owned and operated by the service provider. In the PaaS model, software tools and underlying equipment used by developers to develop software solutions may be provided as a service and hosted by the service provider. SaaS typically includes a service provider licensing software as a service on demand. The service provider may host the software, or may deploy the software to a customer for a given period of time. Numerous combinations of the above models are possible and are contemplated.

The present disclosure includes references to an "embodiment", to one "embodiment", or to groups of "embodiments" (e.g., "some embodiments" or "various embodiments"). Embodiments are different implementations or instances of the disclosed concepts. References to "an embodiment," "one embodiment," "a particular embodiment," and the like do not necessarily refer to the same embodiment. A large number of possible embodiments are contemplated, including those specifically disclosed, as well as modifications or alternatives that fall within the spirit or scope of the disclosure.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

This disclosure may discuss potential advantages that may arise from the disclosed embodiments. Not all implementations of these embodiments will necessarily manifest any or all of the potential advantages. Whether an advantage is realized for a particular implementation depends on many factors, some of which are outside the scope of this disclosure. In fact, there are a number of reasons why an implementation that falls within the scope of the claims might not exhibit some or all of any disclosed advantages. For example, a particular implementation might include other circuitry outside the scope of the disclosure that, in conjunction with one of the disclosed embodiments, negates or diminishes one or more the disclosed advantages. Furthermore, suboptimal design execution of a particular implementation (e.g., implementation techniques or tools) could also negate or diminish disclosed advantages. Even assuming a skilled implementation, realization of advantages may still depend upon other factors such as the environmental circumstances in which the implementation is deployed. For example, inputs supplied to a particular implementation may prevent one or more problems addressed in this disclosure from arising on a particular occasion, with the result that the benefit of its solution may not be realized. Given the existence of possible factors external to this disclosure, it is expressly intended that any potential advantages described herein are not to be construed as claim limitations that must be met to demonstrate infringement. Rather, identification of such potential advantages is intended to illustrate the type(s) of improvement available to designers having the benefit of this disclosure. That such advantages are described permissively (e.g., stating that a particular advantage "may arise") is not intended to convey doubt about whether such advantages can in fact be achieved, but rather to recognize that realization of such advantages often depends on additional factors.

Unless stated otherwise, embodiments are non-limiting. That is, the disclosed embodiments are not intended to limit the scope of claims that are drafted based on this disclosure, even where only a single example is described with respect to a particular feature. The disclosed embodiments are intended to be illustrative rather than restrictive, absent any statements in the disclosure to the contrary. The application is thus intended to permit claims covering disclosed embodiments, as well as such alternatives, modifications, and equivalents that would be apparent to a person skilled in the art having the benefit of this disclosure.

For example, features in this application may be combined in any suitable manner. Accordingly, new claims may be formulated during prosecution of this application (or an application claiming priority thereto) to any such combination of features. In particular, with reference to the appended claims, features from dependent claims may be combined with those of other dependent claims where appropriate, including claims that depend from other independent claims. Similarly, features from respective independent claims may be combined where appropriate.

Accordingly, while the appended dependent claims may be drafted such that each depends on a single other claim, additional dependencies are also contemplated. Any combinations of features in the dependent that are consistent with this disclosure are contemplated and may be claimed in this or another application. In short, combinations are not limited to those specifically enumerated in the appended claims.

Where appropriate, it is also contemplated that claims drafted in one format or statutory type (e.g., apparatus) are intended to support corresponding claims of another format or statutory type (e.g., method).

References to a singular form of an item (i.e., a noun or noun phrase preceded by "a," "an," or "the") are, unless context clearly dictates otherwise, intended to mean "one or more." Reference to "an item" in a claim thus does not, without accompanying context, preclude additional instances of the item. A "plurality" of items refers to a set of two or more of the items.

The word "may" is used herein in a permissive sense (i.e., having the potential to, being able to) and not in a mandatory sense (i.e., must).

The terms "comprising" and "including," and forms thereof, are open-ended and mean "including, but not limited to."

When the term "or" is used in this disclosure with respect to a list of options, it will generally be understood to be used in the inclusive sense unless the context provides otherwise. Thus, a recitation of "x or y" is equivalent to "x or y, or both," and thus covers 1) x but not y, 2) y but not x, and 3) both x and y. On the other hand, a phrase such as "either x or y, but not both" makes clear that "or" is being used in the exclusive sense.

A recitation of "w, x, y, or z, or any combination thereof" or "at least one of ... w, x, y, and z" is intended to cover all possibilities involving a single element up to the total number of elements in the set. For example, given the set [w, x, y, z], these phrasings cover any single element of the set (e.g., w but not x, y, or z), any two elements (e.g., w and x, but not y or z), any three elements (e.g., w, x, and y, but not z), and all four elements. The phrase "at least one of ... w, x, y, and z" thus refers to at least one element of the set [w, x, y, z], thereby covering all possible combinations in this list of elements. This phrase is not to be interpreted to require that there is at least one instance of w, at least one instance of x, at least one instance of y, and at least one instance of z.

Various "labels" may precede nouns or noun phrases in this disclosure. Unless context provides otherwise, different labels used for a feature (e.g., "first circuit," "second circuit," "particular circuit," "given circuit," etc.) refer to different instances of the feature. Additionally, the labels "first," "second," and "third" when applied to a feature do not imply any type of ordering (e.g., spatial, temporal, logical, etc.), unless stated otherwise.

The phrase "based on" or is used to describe one or more factors that affect a determination. This term does not foreclose the possibility that additional factors may affect the determination. That is, a determination may be solely based on specified factors or based on the specified factors as well as other, unspecified factors. Consider the phrase "determine A based on B." This phrase specifies that B is a factor that is used to determine A or that affects the determination of A. This phrase does not foreclose that the determination of A may also be based on some other factor, such as C. This phrase is also intended to cover an embodiment in which A is determined based solely on B. As used herein, the phrase "based on" is synonymous with the phrase "based at least in part on."

The phrases "in response to" and "responsive to" describe one or more factors that trigger an effect. This phrase does not foreclose the possibility that additional factors may affect or otherwise trigger the effect, either jointly with the specified factors or independent from the specified factors. That is, an effect may be solely in response to those factors, or may be in response to the specified factors as well as other, unspecified factors. Consider the phrase "perform A in response to B." This phrase specifies that B is a factor that triggers the performance of A, or that triggers a particular result for A. This phrase does not foreclose that performing A may also be in response to some other factor, such as C. This phrase also does not foreclose that performing A may be jointly in response to B and C. This phrase is also intended to cover an embodiment in which A is performed solely in response to B. As used herein, the phrase "responsive to" is synonymous with the phrase "responsive at least in part to." Similarly, the phrase "in response to" is synonymous with the phrase "at least in part in response to."

Within this disclosure, different entities (which may variously be referred to as "units," "circuits," other components, etc.) may be described or claimed as "configured" to perform one or more tasks or operations. This formulation-[entity] configured to [perform one or more tasks]-is used herein to refer to structure (i.e., something physical). More specifically, this formulation is used to indicate that this structure is arranged to perform the one or more tasks during operation. A structure can be said to be "configured to" perform some task even if the structure is not currently being operated. Thus, an entity described or recited as being "configured to" perform some task refers to something physical, such as a device, circuit, a system having a processor unit and a memory storing program instructions executable to implement the task, etc. This phrase is not used herein to refer to something intangible.

In some cases, various units/circuits/components may be described herein as performing a set of task or operations. It is understood that those entities are "configured to" perform those tasks/operations, even if not specifically noted.

The term "configured to" is not intended to mean "configurable to." An unprogrammed FPGA, for example, would not be considered to be "configured to" perform a particular function. This unprogrammed FPGA may be "configurable to" perform that function, however. After appropriate programming, the FPGA may then be said to be "configured to" perform the particular function.

Different "circuits" may be described in this disclosure. These circuits or "circuitry" constitute hardware that includes various types of circuit elements, such as combinatorial logic, clocked storage devices (e.g., flip-flops, registers, latches, etc.), finite state machines, memory (e.g., random-access memory, embedded dynamic random-access memory), programmable logic arrays, and so on. Circuitry may be custom designed, or taken from standard libraries. In various implementations, circuitry can, as appropriate, include digital components, analog components, or a combination of both. Certain types of circuits may be commonly referred to as "units" (e.g., a decode unit, an arithmetic logic unit (ALU), functional unit, memory management unit (MMU), etc.). Such units also refer to circuits or circuitry.

The disclosed circuits/units/components and other elements illustrated in the drawings and described herein thus include hardware elements such as those described in the preceding paragraph. In many instances, the internal arrangement of hardware elements within a particular circuit may be specified by describing the function of that circuit. For example, a particular "clamping unit" may be described as performing the function of "clamp an output of an amplifier," which means that the clamping unit is "configured to" perform this function. This specification of function is sufficient, to those skilled in the computer arts, to connote a set of possible structures for the circuit.

In various embodiments, as discussed in the preceding paragraph, circuits, units, and other elements defined by the functions or operations that they are configured to implement, The arrangement and such circuits/units/components with respect to each other and the manner in which they interact form a microarchitectural definition of the hardware that is ultimately manufactured in an integrated circuit or programmed into an FPGA to form a physical implementation of the microarchitectural definition. Thus, the microarchitectural definition is recognized by those of skill in the art as structure from which many physical implementations may be derived, all of which fall into the broader structure described by the microarchitectural definition. That is, a skilled artisan presented with the microarchitectural definition supplied in accordance with this disclosure may, without undue experimentation and with the application of ordinary skill, implement the structure by coding the description of the circuits/units/components in a hardware description language (HDL) such as Verilog or VHDL. The HDL description is often expressed in a fashion that may appear to be functional. But to those of skill in the art in this field, this HDL description is the manner that is used transform the structure of a circuit, unit, or component to the next level of implementational detail. Such an HDL description may take the form of behavioral code (which is typically not synthesizable), register transfer language (RTL) code (which, in contrast to behavioral code, is typically synthesizable), or structural code (e.g., a netlist specifying logic gates and their connectivity). The HDL description may subsequently be synthesized against a library of cells designed for a given integrated circuit fabrication technology, and may be modified for timing, power, and other reasons to result in a final design database that is transmitted to a foundry to generate masks and ultimately produce the integrated circuit. Some hardware circuits or portions thereof may also be custom-designed in a schematic editor and captured into the integrated circuit design along with synthesized circuitry. The integrated circuits may include transistors and other circuit elements (e.g. passive elements such as capacitors, resistors, inductors, etc.) and interconnect between the transistors and circuit elements. Some embodiments may implement multiple integrated circuits coupled together to implement the hardware circuits, and/or discrete elements may be used in some embodiments. Alternatively, the HDL design may be synthesized to a programmable logic array such as a field programmable gate array (FPGA) and may be implemented in the FPGA. This decoupling between the design of a group of circuits and the subsequent low-level implementation of these circuits commonly results in the scenario in which the circuit or logic designer never specifies a particular set of structures for the low-level implementation beyond a description of what the circuit is configured to do, as this process is performed at a different stage of the circuit implementation process.

The fact that many different low-level combinations of circuit elements may be used to implement the same specification of a circuit results in a large number of equivalent structures for that circuit. As noted, these low-level circuit implementations may vary according to changes in the fabrication technology, the foundry selected to manufacture the integrated circuit, the library of cells provided for a particular project, etc. In many cases, the choices made by different design tools or methodologies to produce these different implementations may be arbitrary.

Moreover, it is common for a single implementation of a particular functional specification of a circuit to include, for a given embodiment, a large number of devices (e.g., millions of transistors). Accordingly, the sheer volume of this information makes it impractical to provide a full recitation of the low-level structure used to implement a single embodiment, let alone the vast array of equivalent possible implementations. For this reason, the present disclosure describes structure of circuits using the functional shorthand commonly employed in the industry.

Various units, circuits, or other components may be described as "configured to" perform a task or tasks. In such contexts, "configured to" is a broad recitation of structure generally meaning "having circuitry that" performs the task or tasks during operation. As such, the unit/circuit/component can be configured to perform the task even when the unit/circuit/component is not currently on. In general, the circuitry that forms the structure corresponding to "configured to" may include hardware circuits. Similarly, various units/circuits/components may be described as performing a task or tasks, for convenience in the description. Such descriptions should be interpreted as including the phrase "configured to." Reciting a unit/circuit/component that is configured to perform one or more tasks is expressly intended not to invoke 35 U.S.C. § 112(f) for that unit/circuit/component.

The Abstract is provided to comply with 37 C.F.R. § 1.72(b), to allow the reader to quickly ascertain the nature of the technical disclosure. The Abstract is submitted with the understanding that it will not be used to interpret or limit the scope or meaning of the claims.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A system comprising:
a first device; and
a second device;
wherein the first device is configured to:
generate a plurality of packets to be transmitted on a first type of interface to the second device;
determine, for a group of consecutive packets, a future timestamp for when the second device should forward a first packet of the group to a third device;
determine, for the group of consecutive packets, at least one offset to add to the future timestamp, wherein at least one sum of the at least one offset and the future timestamp is applied to at least a second packet of the group;
attach a group of future timestamps to the group of consecutive packets; and
send, at a first data rate, the group of consecutive packets, with the attached future timestamps, to the second device on the first type of interface;
wherein the second device is configured to:
receive the group of consecutive packets from the first device; and
send the group of consecutive packets based on the attached future timestamps to a third device on a second type of interface.

2. A method comprising:
generating, at a first device, a plurality of packets to be transmitted on a first type of interface to a second device;
determining, for each group of consecutive packets, a future timestamp for when the second device should forward a first packet of the group to a third device;
determining, for each group of consecutive packets, an offset to add to the future timestamp, wherein a sum of the offset and the future timestamp is applied to a second packet of the group;
attaching a corresponding pair of future timestamps to each group of consecutive packets;
sending, at a first data rate, each group of consecutive packets, with the attached future timestamps, to the second device on the first type of interface;
receiving, by the second device, each group of consecutive packets from the first device; and
sending, by the second device, each group of consecutive packets based on the attached future timestamps to a third device on a second type of interface.

3. The method of claim 2, wherein each group of consecutive packets comprises a pair of consecutive packets.

4. The system of claim 1 or the method of claims 2 or 3, wherein the second type of interface is different from the first type of interface, and wherein the at least one offset is less than a threshold value.

5. The system or method of claim 4, wherein the first type of interface is a Peripheral Component Interconnect Express interface, and wherein the second type of interface is an Ethernet interface.

6. The system of any of claims 1, or 4 to 5, or the method of any of claims 2 to 5, wherein the future timestamp is determined based at least on a packet size, a data rate, and a local time at the second device.

7. The system of any of claims 1, or 4 to 6, or the method of any of claims 2 to 6, wherein the second device is further configured to send the group of consecutive packets in an alternating manner on a plurality of physical links to the third device.

8. The system or method of claim 7, wherein sending the group of consecutive packets in an alternating manner on the plurality of physical links to the third device comprises sending a first packet of the pair on a first physical link and sending a second packet of the pair on a second physical link.

9. The system or method of claims 7 or 8, wherein the system further comprises the third device, and wherein the third device is configured to recombine, in an interleaved manner, a plurality of packets received on the plurality of physical links.

10. The system or method of claim 9, wherein the third device is further configured to forward the recombined plurality of packets in the interleaved manner on a single physical link at a second data rate

11. The system or method of claim 10, wherein the second data rate is an integer multiple of the first data rate, and optionally twice the first data rate.

12. The system or method of any of claims 9 to 11, wherein the system is configured to perform one or more operations using the interleaved packets forwarding by the third device on the single physical link.

13. The system or any of claims 1, or 4 to 12, or the method of any of claims 2 to 12, , wherein the second device is further configured to:
store received packets with the attached future timestamps in a queue;
retrieve a packet from the queue when a corresponding attached future timestamp reaches a local clock time; and
send the retrieved packet to the third device.

14. A non-transitory computer readable storage medium storing instructions, which when executed by at least one data processor, results in operations comprising:
generating, at a first device, a plurality of packets to be transmitted on a first type of interface to a second device;
determining, for each pair of consecutive packets, a future timestamp for when the second device should forward a first packet of the pair to a third device;
determining, for each pair of consecutive packets, an offset to add to the future timestamp, wherein a sum of the offset and the future timestamp is applied to a second packet of the pair;
attaching a corresponding pair of future timestamps to each pair of consecutive packets;
sending, at a first data rate, each pair of consecutive packets, with the attached future timestamps, to the second device on the first type of interface;
receiving, by the second device, each pair of consecutive packets from the first device; and
sending, by the second device, each pair of consecutive packets based on the attached future timestamps to a third device on a second type of interface.

15. The non-transitory computer readable storage medium of claim 14, wherein the second type of interface is different from the first type of interface, and wherein the offset is less than a threshold.
